# EUROPEAN PATENT APPLICATION

(11) **EP 3 457 102 A1**
(43) Date of publication of application: **20.03.2019**
(21) Application number: 17275142.2
(22) Date of filing: 15.09.2017
(51) Int. Cl.: G01L 5/10, E02D 1/00, E04G 17/06, F16B 1/00

(54) **A METER FOR MOUNTING ON A COMPONENT OF A TEMPORARY CONSTRUCTION STRUCTURE**

(71) Applicant: Hayat Civil Engineering Limited, Ilford, Essex IG4 5LZ (GB)
(72) Inventor: HAYAT, Khazar, Essex IG4 5LZ (GB)
(74) Representative: Abel & Imray

(57) **Abstract**

A meter for mounting on a component of a temporary construction structure, wherein the temporary construction structure is for use in the construction of a permanent structure. The meter comprises a force measuring device arranged to measure a force acting on the component, and an indicator arranged to indicate when the force exceeds a first threshold.

## Description

### Field of the Invention

The present invention concerns a meter for mounting on a component of a temporary construction structure, a temporary construction structure for use in the construction of a permanent structure, and a method of monitoring a force on one or more components of a temporary construction structure for use in the construction of a permanent structure. More particularly, but not exclusively, the invention concerns safety monitoring for temporary construction structures.

### Background of the Invention

In the construction industry, temporary construction structures are needed for various reasons including construction, repair and renovation of buildings. Each component of a temporary construction structure needs to be able to withstand certain forces on it in order not to fail. An example of a temporary construction structure is a formwork, which is a mould into which concrete or similar material is poured, for example to form the foundations of a building.

Such formwork may be formed of sheets of plywood, particleboard of other suitable material held together by ties. While the formwork is being used, the formwork must be able withstand certain hydrostatic forces on its ties. The rate of concrete pouring must therefore be restricted to ensure that the poured concrete starts to gain an "initial" setting. This avoids excessive pressures on the ties, which would otherwise cause the ties to fail. These constraints result in a given desirable "pour rate" for a formwork design. However, in practice there are many factors which affect the pouring rate, such as the rate at which concrete is made available to be poured, the speed at which the workers choose to pour the concrete (which may faster than the pour rate due to a wish to finish the job quickly), and concrete consistency. These factors mean it can be difficult ensuring that the desirable pour rate is kept to, meaning too much force can be exerted on the ties of the formwork, affecting the quality of the construction or even resulting in the formwork failing due to the ties breaking.

Similar constraints exist in other temporary construction structures, for example in shoring and excavation, where the loads on each component of the temporary construction structure varies dependent on various factors.

Furthermore, due to time and cost constraints, it is often not practical for workers to constantly monitor each component in a temporary construction structure for excessive forces. Even if they wish to do so, it is often not possible to reliably identify when excessive forces are occurring.

The present invention seeks to solve and/or mitigate some or all of the above-mentioned problems.

### Summary of the Invention

In accordance with a first embodiment of the invention there is provided a meter for mounting on a component of a temporary construction structure, wherein the temporary construction structure is for use in the construction of a permanent structure, the meter comprising:
a force measuring device arranged to measuring a force acting on the component; and
an indicator arranged to indicate when the force exceeds a first threshold.

By mounting the meter on the component of the temporary construction structure, it can be used to monitor the force acting on the temporary construction structure and component while the temporary construction structure is being used for construction of the permanent structure, and in particular if it exceeds the threshold. For suitably set thresholds, this can indicate that the force is higher than is desirable, and thus provide an indication that the temporary construction structure should be checked as it may be at risk of failing. This may be because it is not being used appropriately, for example because workers are putting too much load on it, or because of defects in its construction or parts, for example.

Preferably, the component supports the temporary construction structure.

Advantageously, the temporary construction structure is a formwork. The meter can then indicate if there is excessive force due to concrete being poured too quickly, for example.

Preferably, the force measuring device measures pressure force. In this case, the force measuring device may be a load cell. Advantageously, the force measuring device comprises an opening, and the force measuring device is arranged to be mounted on the component by the component passing through the opening. In this way, the component can for example be a cable or bar supporting the walls of the formwork, and the meter can measure pressure caused by the cable or bar holding the walls of the formwork in place against the force of the concrete pushing the walls of the formwork outwards.

Alternatively and/or additionally, the force measuring device measures tension force. Alternatively and/or additionally, the force measuring device measures torsion force.

Advantageously, the indicator is arranged to indicate when the force exceeds a second threshold. The indicator may be arranged to indicate when still further thresholds are exceeded. The use of multiple thresholds allows different levels of warning to be indicated; for example a first threshold may indicate only that forces are higher than is desirable, while a second threshold may indicate that failure of the temporary construction structure is likely.

The indicator may comprise one or more light-emitting diodes (LEDs). One LED may use different colours to indicate different thresholds have been exceeded. Multiple LEDs may be used, each indicating a different threshold has been exceeded. Other light sources may be used. Alternatively and/or additionally, other types of indication may be used, such as sound. Alternatively and/or additionally, the indicator may include a numeric display that indicates the size of the force. It will be appreciated that various other types of indication could be used.

The meter may further comprise a user input for a user to input a threshold value on the device. The user input may comprise buttons and/or dials, for example.

Advantageously, the meter further comprises memory, and the device is arranged to store data indicative of the forces measured by the device.

Advantageously, the meter further comprises an interface for communicating with a computing device. The computing device may then be used to set thresholds, download data indicative of the forces measured by the device stored in the memory of the device, or the like. The interface may be arranged to allow the meter to communicate with the computing device via a cable. The cable may be a network cable or a USB cable, for example. Advantageously, the interface is arranged to allow the meter to communicate with the computing device via a wireless connection, for example using the Wi-Fi or Bluetooth standard.

In accordance with a second embodiment of the invention there is provided a temporary construction structure for use in the construction of a permanent structure, the temporary construction structure comprising:
one or more components; and
one or more meters as described above, wherein the one or meters are mounted on the one or more components.

Preferably, the one or more components support the temporary construction structure.

Advantageously, the temporary construction structure is a formwork.

In accordance with a third embodiment of the invention there is provided a method of monitoring a force on one or more components of a temporary construction structure for use in the construction of a permanent structure, the method comprising the steps of:
mounting one or more meters as described above on the one or more components;
using a construction method to construct the permanent structure using the temporary construction structure; and
in response to any of the one or more indicators indicate that a threshold has been exceeded, determining a modification required to the construction method.

The construction method may be modified as determined.

The method may further comprise the step of monitoring the one or more indicators while using of the temporary construction structure. Alternatively, for example, the meters may be in communication with a computing device, mobile telephone or the like, which alerts a user when a threshold has been exceeded.

The method may further comprise the step of setting the thresholds of the one or more meters prior to the step of using of the temporary construction structure.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a meter in accordance with an embodiment of the invention;
- Figure 2a: shows the meter in use on a formwork structure in accordance with an embodiment of the invention;
- Figure 2b: if a flowchart of a method of using the meter with the formwork of figure 2a;
- Figure 3: shows the meter in use on a shoring jack in accordance with an embodiment of the invention;
- Figure 4: shows the meter in use in an excavation trench in accordance with an embodiment of the invention; and
- Figure 5: shows the meter in use on a cantilevered sheet pile wall in accordance with an embodiment of the invention.

### Detailed Description

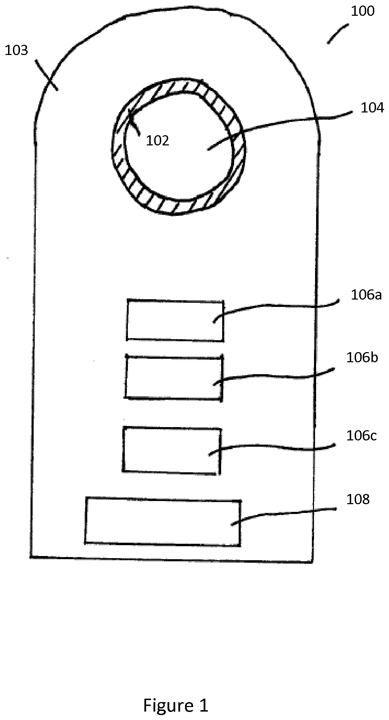

A meter for monitoring the load on components of a temporary construction structure in accordance with an embodiment of the invention is now described with reference to Figure 1.

The meter 100 comprises a hole 104 for mounting onto the component of a temporary construction structure, for example a pole or a leg of a structure, as described in more detail below. Surrounding the hole 104 is a load cell 102 which output an electrical signal whose magnitude is proportional to the force being exerted on the load cell 102. The signal from the load cell 102 is received by a microprocessor (not shown). In alternative embodiments, a strain gauge or any other force measuring device surrounds the hole 104. The meter 100 has a robust casing 103 formed of shatterproof plastics material. In other embodiments other suitable materials may be used.

The meter further comprises a set of light-emitting diode (LED) indicators 106a, 106b and 106c. In the present embodiment, if the level of the signal received by the microprocessor is below a first threshold, the microprocessor activates the first LED indicator 106a, which is green in colour. If the level of the signal received by the microprocessor is above the first threshold but below a second threshold, the microprocessor activates the second indicator 106b, which is amber in colour. Finally, if the level of the signal received by the microprocessor is above the second threshold, the microprocessor activates the third indicator 106c, which is red light in colour. In alternative embodiments a different number of indicators are used, such as one or two, which are activated by the microprocessor to indicate a range which the level of the signal output by the load cell 102 is within. In yet further embodiments, the indicator or indicators are activated only when the value is above the second threshold, or either between the first and second threshold and above the second threshold. In other embodiments the indicators utilise light of different colours and/or sounds and/or any other suitable means of indication.

The meter 100 also comprises a numeric liquid-crystal display 108, which displays the size of the force measured by the load cell 102.

The thresholds can be defined by a user of the meter 100, such that the first indicator indicates a safe load on the component being mounted, the second indicator indicates that the load may be unsafe and the third indicator indicates that the load on the component is dangerously high. This allows the thresholds to be adjusted based on the requirements of each individual temporary construction structure and each component. In alternative embodiments, the thresholds may be pre-set.

The meter 100 may comprise an input connection allowing the meter 100 to be connected by a cable to a computing device such as a personal computer or mobile "smartphone", on which is installed an application or a web page is made available using which the user can set the thresholds. The cable may be a USB cable, network cable or the like. In alternative embodiments, the meter 100 comprises a wireless functionality (e.g. Wi-Fi or Bluetooth) allowing it to wireless connect to a computing device. In other alternative embodiments, the meter 100 may comprise input means such as buttons and/or dials, which are used in conjunction with the display 108 to set the thresholds on the device itself. It will be appreciated that these are only examples, and many other suitable ways of setting the thresholds could be used.

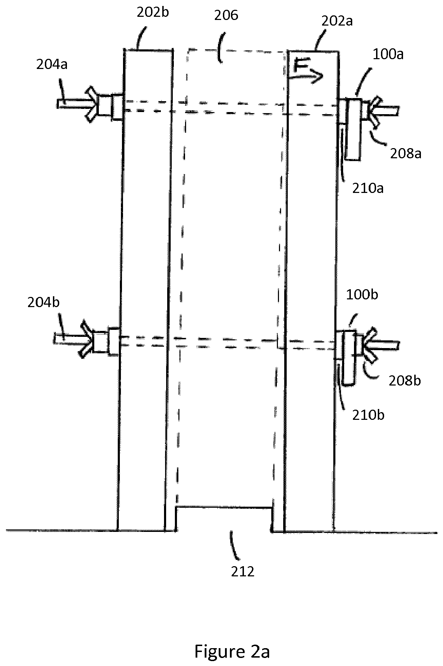

A plurality of meters mounted on components of exemplary formwork in accordance with an embodiment of the invention are now described with reference to Figure 2a. The meters 100a, 100b are mounted on tie rods 204a, 204b respectively (the tie rods 204 being inserted through the holes 104 of the meters). The meters 100a, 100b are respectively mounted between a flat force bearing plate 210a, 210b, and a nut 208a, 208b. A force bearing plate and nut are mounted on the opposite side of the tie rods 204a, 204b.

The formwork is constructed such that, during a concrete pour, the tie rods 204 withstand hydrostatic forces of the wet concrete to hold in place two walls 202a and 202b that define a volume 206.

The meters 100a, 100b are placed on the formwork such that they are able to measure the force exerted onto them as concrete is poured into the volume 206. The meters are set with specific thresholds (which may not be the same for each), and the indicators 106a-106c will light up in response to the measured force.

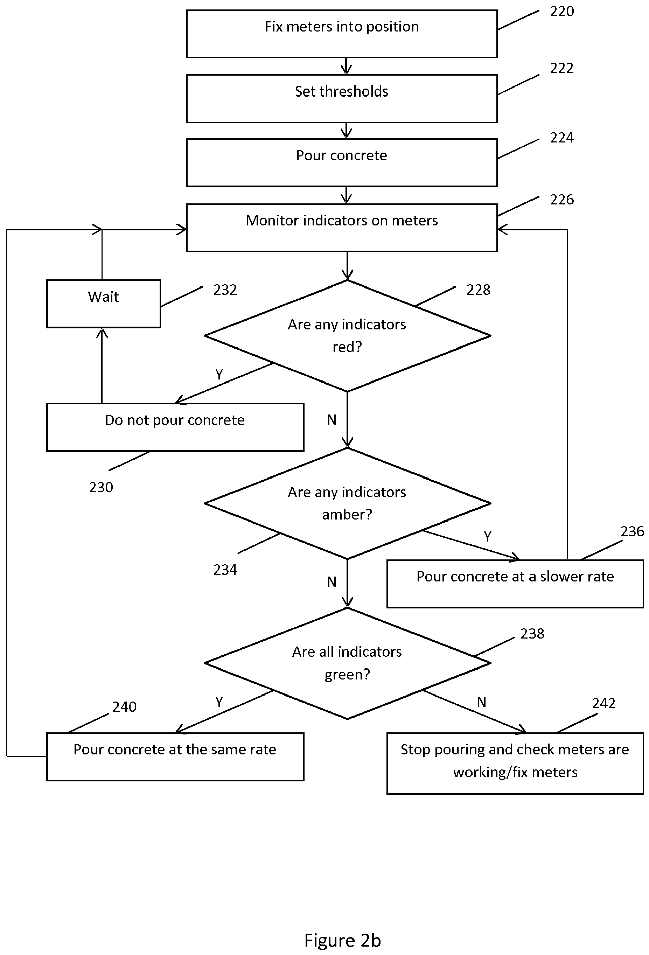

A method of using the meters with the formwork of figure 2a in accordance with an embodiment of the invention is now described with reference to the flowchart of Figure 2b.

First, the meters are mounted onto the tie rods 204a and 204b by a worker (step 220). In other embodiments, the formwork comprises a different number of tie rods and a different number of meters are mounted onto the tie rods of the formwork by the worker. It will be appreciated that a worker could be any worker involved in the construction of a temporary or permanent structure, including a site engineer or technician (or a group of workers).

Next, the thresholds of each of the meters are set by the worker (step 222). In an alternative embodiment, some or all of the thresholds are already pre-set and a worker does not need to set the thresholds.

Next, the concrete pour is started at a rate chosen by the worker (step 224). While the pour is in progress, the worker monitors the indicators on the meters (step 226). In alternative embodiments, the meters may transmit the indicator data wirelessly, so that the indicators may be monitored by the worker (or others) remotely.

If any red indicators are lit (step 228), the concrete pour is paused (steps 230 and 232), and investigated by a worker. The indicators continue to be monitored for any changes in the indicators lit (step 226).

If no red indicators are lit and any amber indicators are lit (step 234), then the concrete is poured at a slower rate (step 236). In alternative embodiments, the concrete pour is also stopped when any amber indicator is lit. Again, the indicators continue to be monitored for any changes in the indicators lit (step 226).

If no red indicators are lit, and no amber indicators are lit, and all green indicators are lit (step 238), then the concrete is poured at the same rate, and again the indicators continue to be monitored for any changes in the indicators lit (step 226).

Finally, if no red and amber indicators are lit, and not all green indicators are lit (step 238), then the concrete pour is stopped to troubleshoot the meters (step 242).

While in the present embodiment the indicators are monitored by a user, in alternative embodiments the indicators are monitored automatically, and an alert is sounded to an engineer if an amber or a red indicator is lit.

In yet further embodiments the meter records data regarding the status of the indicators so that the indicator history can be downloaded by a user at any time.

In alternative embodiments, the steps 228, 234 and 238 of monitoring the indicators are performed in a different order, and concrete pouring is stopped when any red indicators are lit. The pouring of concrete is continued, slowed or stopped when the amber indicator is lit.

In other alternative embodiments, the meters 100a, 100b are in communication with a computing device, for example via a cable or wireless connection as described above. The computing device can then be arranged to provide an alert to the worker (or other person) when any desired thresholds or combinations thereto are exceeded. The computing device may be a smartphone or personal computer device, for example. The meters 100a, 100b could be in communication with mobile telephone infrastructure, and arranged to cause an "SMS" text message to be sent to the worker when a threshold was exceeded, for example.

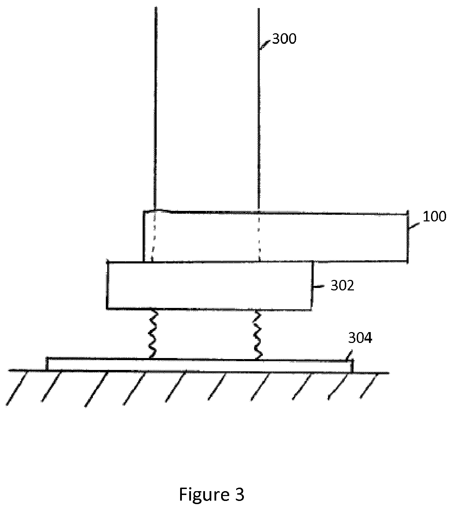

Figure 3 shows the meter 100 in use on a shoring jack accordance with an embodiment of the invention. The shoring jack supports a load of a structure (such as one which is in danger of collapse or being repaired), and comprises a jack leg 300, a screw jack 302 and a base plate 304. The meter 100 is mounted between the screw jack 302 and the jack leg 300, such that the meter is able to take the full load on the jack leg. The meter 100 may be used to monitor the load on the shoring jack, in a similar way to that described with respect to Figure 2a.

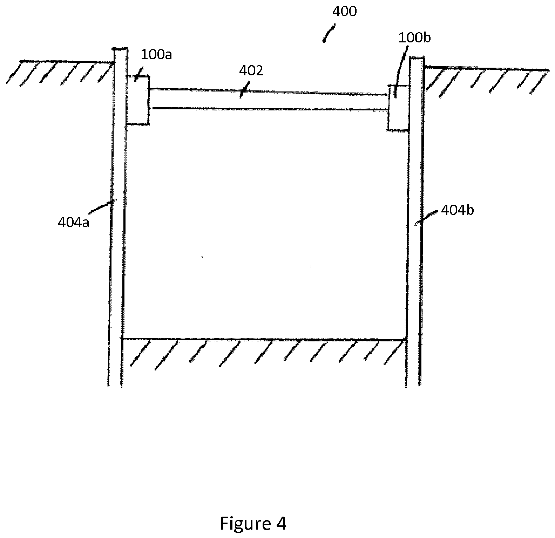

Figure 4 shows the meter 100 in use in an excavation trench 400 in accordance with an embodiment of the invention. The trench 400 is supported by two sheet piles 404a and 404b and a prop 402. The meter 100 is mounted in between the prop 402 and the sheet pile 404a, such that the meter is able to take the full load acting on the prop 402. The meter 100 may again be used to monitor the load on the shoring jack, in a similar way to that described with respect to Figure 2a.

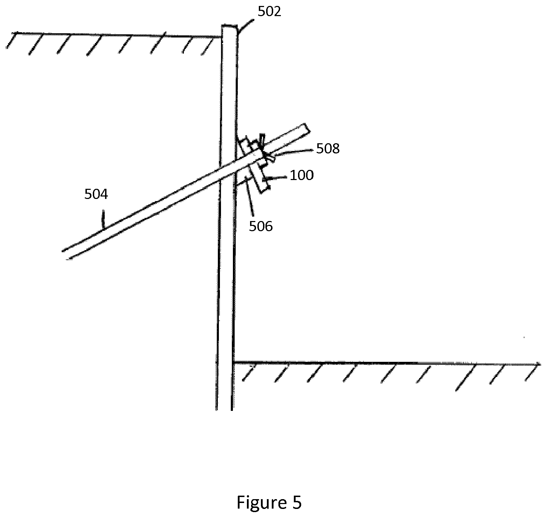

Figure 5 shows the meter 100 in use on a cantilevered sheet pile wall 502 in accordance with an embodiment of the invention. The sheet pile wall 502 is supported by a rod 504, a block 506 and a nut 508. The meter is mounted on the rod 504 between the block 506 and the nut 508. The meter 100 may be used to monitor the load on the shoring jack, in a similar way to that described with respect to Figure 2a.

It will be appreciated that the meter 100, or a plurality of meters 100, could be used similarly to monitor the loads of any temporary construction structure.

While the present invention has been described and illustrated with reference to particular embodiments, it will be appreciated by those of ordinary skill in the art that the invention lends itself to many different variations not specifically illustrated herein. By way of example only, certain possible variations will now be described.

While the meter 100 shown in Figure 1 has a circular hole for mounting onto components of temporary construction structures, in alternative embodiments the hole is square, rectangular or any other shape.

In further embodiments, the shape of the device is square, circular, oval, disc-shaped or any other shape, and the hole is located at any position on the device. Furthermore, the indicators are located at any position on the device, and in some embodiments the indicators are located within the casing of the device such that a part or whole of the casing lights up.

In yet further embodiments the meter 100 in Figure is also provided with an adapter, which is mountable directly on a component of a temporary construction structure, and which makes the meter 100 compatible with other systems (for example, RMD, PERI, DOKA or EFCO proprietary systems).

## Claims

**1.** A meter for mounting on a component of a temporary construction structure, wherein the temporary construction structure is for use in the construction of a permanent structure, the meter comprising:
a force measuring device arranged to measure a force acting on the component; and
an indicator arranged to indicate when the force exceeds a first threshold.

**2.** A meter as claimed in claim 1, wherein the component supports the temporary construction structure.

**3.** A meter as claimed in claim 1 or 2, wherein the temporary construction structure is a formwork.

**4.** A meter as claimed in any preceding claim, wherein the force measuring device measures pressure force.

**5.** A meter as claimed in any claim 4, wherein the force measuring device is a load cell.

**6.** A meter as claimed in claim 4 or 5, wherein the force measuring device comprises an opening, and wherein the force measuring device is arranged to be mounted on the component by the component passing through the opening.

**7.** A meter as claimed in any preceding claim, wherein the force measuring device measures tension force.

**8.** A meter as claimed in any preceding claim, wherein the indicator is arranged to indicate when the force exceeds a second threshold.

**10.** A meter as claimed in any preceding claim, wherein the indicator comprises one or more light-emitting diodes.

**11.** A meter as claimed in any preceding claim, further comprising a user input for a user to input a threshold value on the device.

**12.** A meter as claimed in any preceding claim, further comprising memory, and wherein the device is arranged to store data indicative of the forces measured by the device.

**13.** A meter as claimed in any preceding claim, further comprising an interface for communicating with a computing device.

**14.** A temporary construction structure for use in the construction of a permanent structure, the temporary construction structure comprising:
one or more components; and
one or more meters as claimed in any of claims 1 to 13, wherein the one or meters are mounted on the one or more components.

**15.** A temporary construction structure as claimed in claim 14, wherein the one or more components support the temporary construction structure.

**16.** A temporary construction structure as claimed in claim 14 or 15, wherein the temporary construction structure is a formwork.

**17.** A method of monitoring a force on one or more components of a temporary construction structure for use in the construction of a permanent structure, the method comprising the steps of:
mounting one or more meters as claimed in any of claims 1 to 13 on the one or more components;
using a construction method to construct the permanent structure using the temporary construction structure; and
in response to any of the one or more indicators indicate that a threshold has been exceeded, determining a modification required to the construction method. also actually modifying the construction method

**18.** A method as claimed in claim 17, further comprising the step of monitoring the one or more indicators while using of the temporary construction structure.

**19.** A method as claimed in claim 17 or 18, further comprising the step of setting the thresholds of the one or more meters prior to the step of using of the temporary construction structure.
